Europäisches Patentamt

European Patent Office

Office européen des brevets

(11) Publication number: **0 141 872**
**B1**

(12) **EUROPEAN PATENT SPECIFICATION**

(45) Date of publication of patent specification: **30.11.88**

(21) Application number: **83111376.6**

(22) Date of filing: **14.11.83**

(51) Int. Cl.⁴: **C 01 B 17/05, B 01 D 53/34,**
**F 03 G 7/04, C 02 F 1/72**

(54) **Removal of hydrogen sulfide from steam.**

(43) Date of publication of application:
**22.05.85 Bulletin 85/21**

(45) Publication of the grant of the patent:
**30.11.88 Bulletin 88/48**

(84) Designated Contracting States:
**FR IT**

(56) References cited:
**EP-A-0 086 919**
**EP-A-0 097 303**
**US-A-3 226 320**
**US-A-4 076 621**
**US-A-4 091 073**
**US-A-4 363 215**

(73) Proprietor: **THE DOW CHEMICAL COMPANY**
**2030 Dow Center Abbott Road P.O. Box 1967**
**Midland, MI 48640 (US)**

(72) Inventor: **Jernigan, Robert Thorne**
**103 Ash Lane**
**Lake Jackson Texas 77566 (US)**

(74) Representative: **Casalonga, Axel et al**
**BUREAU D.A. CASALONGA OFFICE JOSSE &**
**PETIT Morassistrasse 8**
**D-8000 München 5 (DE)**

Courier Press, Leamington Spa, England.

**Description**

This invention relates to a process for removing hydrogen sulfide ($H_2S$) from geothermal steam used to operate a turbine.

It is known from U.S.—A—4,123,506 dated October 31, 1978 and U.S.—A—4,202,864, dated May 13, 1980 that geothermal steam containing $H_2S$ can be purified by contacting the steam with a metal compound that forms insoluble metallic sulfides.

It is also known from U.S.—A—4,196,183, dated April 1, 1980 that geothermal steam containing $H_2S$ can be purified by added oxygen and passing it through an activated carbon bed.

It is further known from U.S.—A—4,363,215, dated December 14, 1982 that geothermal steam containing $H_2S$ can be purified by the reaction of the steam with hydrogen peroxide and a ferrous catalyst.

Various processes for hydrogen sulfide control in geothermal steam are outlined in the U.S. Department of Energy Report #DOE/EV-0068 (March 1980) by F. B. Stephens, et al.

The removal of $H_2S$ from sour gases and sour water with ferric chelates is shown by U.S.—A—4,009,251, US—A—4,091,073 and US—A—4,076,621, but said US patents do not teach removal of $H_2S$ from geothermal steam.

The present invention is directed to a process wherein residual steam containing $H_2S$ from a geothermal steam power plant is purified before release into the atmosphere.

The process of this invention has the following steps:

(A) condensing said residual steam containing $H_2S$ from a geothermal steam power plant in a condensing zone under a temperature sufficiently low to convert said steam into an aqueous solution containing dissolved hydrogen sulfide and its ions;

(B) converting said aqueous sulfide solution to an aqueous solution containing free sulfur and ferrous chelate by contacting said aqueous sulfide solution with an aqueous solution of ferric chelate containing a sufficient amount of ferric chelate to completely oxidize said sulfide ions to sulfur;

(C) converting said ferrous chelate solution with air in a cooling zone into an aqueous solution containing ferric chelate; and

(D) recycling said ferric chelate solution back to said condensing zone.

In the process of this invention about 20 to 80 percent of the $H_2S$ gas in the geothermal steam is absorbed into the condensate and the dissolved $H_2S$ is treated with ferric chelate to produce finely divided sulfur. The non-condensed or non-dissolved $H_2S$ gas is absorbed with conventional $H_2S$ absorbers such as aqueous alkanol amine solutions or potassium carbonate solutions or caustic solutions or oxidized to sulfur using the Stretford process.

It has been found that it is more advantageous to use indirect condensers or surface condensers such as a shell and tube condenser to condense the steam when other systems are readily available for $H_2S$ abatement of the non-condensable gas stream. The advantage of using the surface condenser is that only about 20 percent of the incoming $H_2S$ is absorbed in the condensate while about 80 percent remains in the non-condensable gas the purification of which is more economical. Hence, less ferric chelate is needed to react with the dissolved $H_2S$ and/or its ions. Further, since the condensing fluid is not mixed with the condensate, there is less total liquid volume to process.

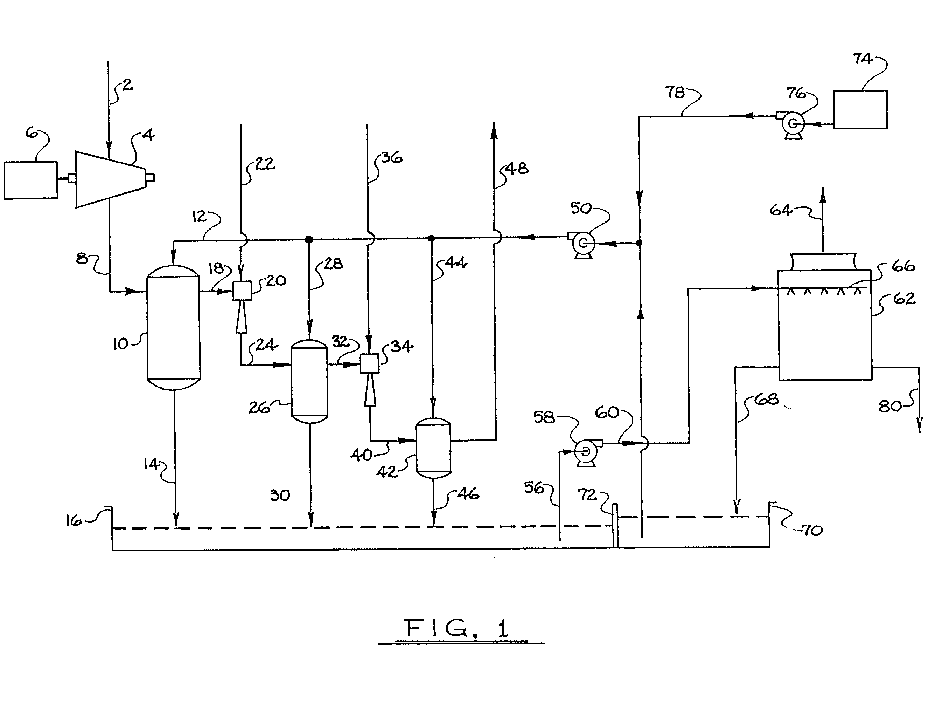

Figure 1 illustrates a process in which this invention is applied for the oxidation of hydrogen sulfide contained in a liquid stream produced by the condensation of geothermal steam in an indirect contact condenser and as such eliminates the environmental pollution problems associated with the discharge of an effluent stream containing the toxic and noxious hydrogen sulfide.

In Figure 1, the geothermal steam from line 2 is used to power a steam turbine 4 which is connected to an electric power generator 6. The turbine 4 exhausts through line 8 to an indirect condenser 10. Cooling water containing chelated iron (ferric chelate) from line 12 is sprayed into condenser 10 for this condensation and passes from the condenser 10 through line 14 to the hot well 16 operating at 38—52°C (100—126°F). Non-condensable gases, such as $CO_2$, $N_2$, $O_2$ and $H_2S$ are removed from the main condenser 10 through line 18 by two steam jet ejectors 20 and 34 and the associated condensers 26 and 42. The ejectors 20 and 34 are operated by steam supplied by lines 22 and 36 respectively. These ejectors create a partial vacuum or low pressure zone. The exhaust steam from the ejector 20 is carried by line 24 to the condenser 26 and by line 32 to the second ejector 34. The exhaust steam from ejector 34 is carried by line 40 to condenser 42. Cooling water from line 12 is supplied to each of the condensers 26 and 42 by lines 28 and 44 respectively. The condensed steam from condenser 26 and 42 flows by means of lines 30 and 46 to the hot well 16. The non-condensable gases and the exhaust steam are then vented to a conventional caustic scrubber, alkanol amine or potassium carbonate unit through line 48 for removal of the $H_2S$ gases.

Pump 58 is used to pump the combined condensed geothermal steam and cooling water from the hot well 16 through line 60 the induced-draft cooling tower 62 with internal spray heads 66 where an amount of water equal to approximately 80% of the condensed steam is evaporated by the air flow through the tower which also strips all of the dissolved hydrogen sulfide from the liquid and it would be vented to the environment by means of the air stream 64 except for the use of chelated iron as described herein. The excess condensed steam which is not evaporated overflows a weir (not shown) in the base of the cooling tower 62 for disposal by line 80. The remainder of the cold water flows through line 68 to the relatively cold well 70 which operates at 24—29°C (75—85°F). Pump 50 is used to pump the cold water from the cold well 70 to the condensers 42, 26, and 10. The hot well 16 is separated from the cold well 70 by a weir 72.

In order to prevent the release of the dissolved hydrogen sulfide to the environment in the air stream 64 flowing from the top of the cooling tower 62, an amount of chelated iron is added to the circulating water which is greater than the stoichiometric amount required to oxidize the dissolved hydrogen sulfide in the hot well 16. In this manner, the dissolved hydrogen sulfide is effectively oxidized before the water enters the top of the cooling tower 62 from line 60. The air flow and time of contact between the air and water in the cooling tower 62 is sufficiently long that the ferrous chelate which results from the oxidation of dissolved hydrogen sulfide in the hot well 16 and associated piping 56 and 60 is reoxidized to the active ferric state as it passes down through the cooling tower 62. Elemental sulfur in a finely divided solid form produced by this process circulates freely throughout the system and may be recovered by conventional means from the overflow line 80. Such recovery methods may allow the sulfur to agglomerate into a heavy slurry after which the supernatent liquid may be removed by decantation, centrifugation, filtration, and the like.

In order to maintain at least the stoichiometric amount of iron chelate required for this process, an amount of fresh iron chelate equal to the amount lost in the overflow line 80 is added from the storage vessel 74 by pump 76 and inlet line 78.

In a preferred embodiment, only the steam condensate containing $H_2S$ drains down line 14 into the hot well 16 since the cooling water does not mix with and scrub $H_2S$ from the goethermal steam. Due to this reduced amount of $H_2S$ in the condensate entering the hot well 16 from line 14, the amount of ferric chelate used or added can be much less while maintaining the required stoichiometric ratio of ferric chelate to $H_2S$ in the hot well and the amount lost in the overflow 80 is less.

Geothermal steam from the Geysers Known Geothermal Resource Area (KGRA) ("The Geysers" is an area in California, U.S.A., which is noted for its geothermal activity, including geysers) has been found to contain the following ranges and average values of hydrogen sulfide and other impurities in parts per million.

| Gas | Range | Average |
| --- | --- | --- |
| $H_2S$ | 5—1600 | 222 |
| $CO_2$ | 290—30600 | 3260 |
| $CH_4$ | 13—1447 | 194 |
| $NH_3$ | 9—1060 | 194 |
| $N_2$ | 6—638 | 52 |
| $H_2$ | 11—218 | 56 |

One purpose of this invention is to reduce, abate, or eliminate the hydrogen sulfide ($H_2S$) from condensed geothermal steam after the steam is used to power a turbine.

This invention can also be applied to other KGRA's that depend on liquid-dominated resources as the source of energy. In these cases, the geothermal fluids would be treated directly thus eliminating the condensation step.

In the process of this invention, it has been found that the amount of ferric chelate used for the sulfide conversion should be in the range from about 1.0 to about 6.0 moles and preferably about 1.2 to about 3.0 mols of ferric chelate per mole of $H_2S$..

The temperature range of the sulfide conversion step should be in the range from about 1.0 to about 99°C and preferably in the range from about 25 to about 60°C.

The sulfide conversion step should also be conducted at a pH in the range from about 5 to about 10 and preferably in the range from about 6.8 to about 8.3.

The temperature range of the condensing zone should be in the range from about 1.0 to about 99°C and preferably in the range from about 25 to about 65°C.

The temperature range of the chelate converting zone should be in the range from about 1.0 to about 99°C and preferably in the range from about 25 to about 65°C.

Chelating agents useful in preparing the ferric chelate of the present invention include those chelating or complexing agents which form a water-soluble chelate. Representative of such chelating agents are the aminocarboxylic acids, such as nitrilotriacetic acid, N-hydroxyethyliminodiacetic acid, ethylenediaminetetraacetic acid, N-hydroxyethylethylenediaminetriacetic acid, diethylenetriaminepentaacetic acid, cyclohexanediaminetetraacetic acid, triethylenetetraaminehexaacetic acid and the like, including the salts thereof. Of such chelating agents, ethylenediaminetetraacetic, N-hydroxyethylethylenediaminetriacetic acid and N-hydroxyethyliminodiacetic acid, are most advantageously employed in preparing the ferric chelate used herein.

Detailed examples of the invention are given below for purposes of further illustrating the invention.

3

Examples 1—4

A fully chelated iron solution, Versenol® iron (available from The Dow Chemical Company, Midland, Michigan, U.S.A.), which contained 4% iron was prepared from the trisodium salt of N-hydroxyethylethylenediaminetriacetic acid ($Na_3$ HEDTA) and ferric nitrate. After baseline data were obtained on the hydrogen sulfide emissions using the apparatus of Figure 1 of the drawings when no iron chelate was present (i.e. the control), a drum of the Versenol® iron concentrate was added rapidly to the cold well 70. Thereafter, pump 76 was used to meter in additional iron chelate at a rate of about two pounds per hour of iron to balance that which was lost in the overflow 80. This resulted in the maintenance of an iron concentration in the circulating water of about 20 parts per million (ppm) which is slightly greater than the stoichiometric requirement of 14 ppm in the hot well 16. Immediately after the addition of the iron chelate to the system, the hydrogen sulfide emissions from the cooling tower became immeasurably small and could not be detected in this stream throughout the remainder of the trial.

Data obtained during this trial are presented in Table I. These data show that while the instant invention is extremely effective for the removal of hydrogen sulfide from aqueous streams, the relatively constant percentage of hydrogen sulfide in the non-condensable gas stream 48 showed it to have little effect on gaseous streams containing hydrogen sulfide.

TABLE I

| Run | Steam flow line 2 M kg/hr (M#/hr) | $H_2S$ in line 2 kg/hr (#/hr) | $H_2S$ in air stream 64 (ppm) | $H_2S$ in line 48 kg/hr (#/hr) | $H_2S$ in line 48 (% of line 2) | Overflow line 80 M kg/hr (M#/hr) | Fe feed rate kg/hr (#/hr) | Fe Concentration in cold well 70 (ppm) |
|---|---|---|---|---|---|---|---|---|
| Control | 81.6 (180) | 15.8 (35.0) | 3.8 | 2.9 (6.5) | 19 | 17 (38) | 0 | 0 |
| Example 1 | 83.0 (183) | 15.6 (34.5) | 0 | 2.3 (5.1) | 15 | 24 (54) | 0.9 (2.0) | 21 |
| Example 2 | 81.2 (179) | 15.0 (33.1) | 0 | 2.5 (5.6) | 17 | 20 (44) | 1.0 (2.3) | 21 |
| Example 3 | 80.7 (178) | 15.3 (33.7) | 0 | 2.9 (6.3) | 19 | 22 (48) | 0.9 (2.1) | 20 |
| Example 4 | 80.7 (178) | 15.3 (34.2) | 0 | 2.7 (6.0) | 18 | 24 (54) | 0.8 (1.8) | 20 |

## Claims

1. A process for removing hydrogen sulfide ($H_2S$) from geothermal steam, comprising:
(i) in a first step
(A) condensing said geothermal steam in a condensing zone at a temperature sufficiently low to convert said steam into an aqueous solution containing dissolved hydrogen sulfide and its ions;
(B) converting said aqueous sulfide solution to an aqueous solution containing free sulfur and ferrous chelate by contacting said aqueous sulfide solution with an aqueous solution of ferric chelate containing a sufficient amount of ferric chelate to completely oxidize said sulfide ions to sulfur in a conversion zone which may also be the condensing zone;
(C) converting said ferrous chelate solution with air in a cooling zone into an aqueous solution containing ferric chelate; and
(D) recycling said ferric chelate solution back to said conversion zone.
(ii) in a second step
(E) the non-condensed or non-dissolved $H_2S$ gas is exhausted or absorbed or otherwise oxidized.

2. The process as set forth in Claim 1, wherein in the second step the non-condensed or non-dissolved $H_2S$ gas is absorbed with a conventional $H_2S$ absorber or oxidized by another process.

3. The process as set forth in Claim 1 wherein the amount of ferric chelate used is in the range from 1.0 to 6.0 moles of ferric chelate per mole of $H_2S$.

4. The process as set forth in Claim 1 wherein the ferric chelate range is from 1.2 to 3.0 moles of ferric chelate per mole of $H_2S$.

5. The process as set forth in Claim 1 wherein ferric chelate is added as needed to maintain said sufficient amount.

6. The process as set forth in Claims 1 to 5 wherein the non-condensed or non-dissolved $H_2S$ gas is

absorbed with a H₂S absorber selected from the group comprising aqueous alkanolamine solutions, potassium carbonate solution and caustic solutions.

7. The process as set forth in Claims 1 to 5 wherein the non-condensed or non-dissolved H₂S gas is oxidized to sulfur using the Stretford process.

## Patentansprüche

1. Verfahren zur Entfernung von Schwefelwasserstoff aus geothermischen Dampf
(i) Erste Stufe
A) Kondensation des geothermischen Dampfes in einer Kondensationszone bei einer Temperatur, die niedrig genug ist, um den Dampf in eine wässrige Lösung zu verwandeln, die gelösten Schwefelwasserstoff und seine Ione enthält;
B) Umwandlung der wässrigen Schwefelwasserstofflösung in eine wässrige Lösung, die freien Schwefel und Eisen (II)-chelat enthält, indem die wässrige Schwefelwasserstofflösung mit einer wässrigen Lösung von Eisen (III)-chelat in Kontakt gebracht wird, die genug Eisen (III)-chelat enthält, um in einer Umwandlungszone, die auch die Kondensationszone sein kann, die Schwefelwasserstoffionen vollständig zu Schwefel zu oxidieren;
C) Umwandlung der Eisen (II)-chelatlösung mit Luft in einer Kühlzone in eine wässrige Lösung, die Eisen (III)-chelat enthält;
D) Rückführung der Eisen (III)-chelatlösung zur Umwandlungszone.
(ii) Zweite Stufe
E) Das nichtkondensierte oder nichtgelöste Schwefelwasserstoffgas wird abgelassen oder absorbiert oder anderweitig oxidiert;

2. Verfahren gemäß Anspruch 1, bei dem in der zweiten Stufe das nichtkondensierte oder nichtgelöste H₂S-Gas mit Hilfe eines herkömmlichen H₂S-Absorptionsmittel absorbierte oder durch ein anderes Verfahren oxydiert wird.

3. Verfahren gemäß Anspruch 1, bei dem die Menge des verwendeten Eisen (III)-chelats im Bereich von 1,0 bis 6, 0 mol Eisen (III)-chelat pro mol Schwefelwasserstoff liegt.

4. Verfahren gemäß Anspruch 1, bei dem der Bereich des Eisen (III)-chelats bei 1, 2 bis 3,0 mol Eisen (III)-chelat pro mol H₂S liegt.

5. Verfahren gemäß Anspruch 1, bei dem Eisen (III)-chelat in der Menge zugegeben wird, die benötigt wird, um die besagte ausreichende Menge aufrechtzuerhalten.

6. Verfahren gemäß Anspruch 1 bis 5, bei dem das nichtkondensierte oder nichtgelöste H₂S-Gas durch ein H₂S-Absorptionsmittel aus der Gruppe der wässrigen Alkanolaminlösungen, Kaliumkarbonatlösungen oder kaustischen Lösungen absorbiert wird.

7. Verfahren gemäß Anspruch 1 bis 5, bei dem das nichtkondensierte und nichtgelöste H₂S-Gas unter Anwendung des Stretford-Verfahrens zu Schwefel oxydiert wird.

## Revendications

1. Procédé pour séparer du sulfure d'hydrogène (H₂S) d'avec de la vapeur géothermique, comprenant:
(1) dans une première étape
(A) la condensation de ladite vapeur géothermique, dans une zone de condensation, à une température suffisamment basse pour convertir ladite vapeur en une solution aqueuse contenant du sulfure d'hydrogène dissous et ses ions;
(B) la conversion de ladite solution aqueuse de sulfure en une solution aqueuse contenant du soufre libre et un chélate ferreux, par mise en contact de ladite solution aqueuse de sulfure avec une solution aqueuse de chélate ferrique, contenant une quantité suffisante de chélate ferrique pour oxyder complètement lesdits ions sulfures en soufre, dans une zone de conversion qui peut également être la zone de condensation;
(C) la conversion de ladite solution de chélate ferreux, avec de l'air, dans une zone de refroidissement, en une solution aqueuse contenant un chélate ferrique; et
(D) le recyclage de ladite solution de chélate ferrique vers ladite zone de conversion;
(2) dans une seconde étape
(E) le gaz H₂S non condensé ou non dessous est épuisé ou absorbé ou oxydé autrement.

2. Procédé selon la revendication 1, dans lequel, dans la seconde étape, le gaz H₂S non condensé ou non dissous est absorbé à l'aide d'un absorbeur classique d'H₂S ou oxydé par un autre procédé.

3. Procédé selon la revendicaton 1, dans lequel la quantité de chélate ferrique utilisé se situe dans l'intervalle allant de 1,0 à 6,0 moles de chélate ferrique par mole d'H₂S.

4. Procédé selon la revendication 1, dans lequel l'intervalle de chélate ferrique va de 1,2 à 3,0 moles de chélate ferrique par mole d'H₂S.

5. Procédé selon la revendication 1, dans lequel on ajoute du chélate ferrique selon les besoins pour maintenir ladite quantité suffisante.

6. Procédé selon leeees revendications 1 à 5, dans lequel le gaz H₂S non condensé ou non dissous est absorbé à l'aide d'un absorbeur d'H$_2$S, choisi parmi le groupe comprenant les solutions aqueuses d'alcanolamine, une solution de carbonate de potassium et les solutions caustiques.

7. Procédé selon les revendications 1 à 5, dans lequel le gaz H$_2$S non condensé ou non dissous est oxydé en soufre, par le procédé Stretford.

FIG. 1